# EUROPEAN PATENT APPLICATION

(11) **EP 3 391 986 A1**
(43) Date of publication of application: **24.10.2018**
(21) Application number: 18166081.2
(22) Date of filing: 06.04.2018
(51) Int. Cl.: B23K 9/173, B23K 9/32, H01R 13/00, H01R 13/621

(54) **SELF ADJUSTING SEALS FOR WIRE FEEDER CONNECTION**

(30) Priority: 07.04.2017 US 201715482407
(71) Applicant: Lincoln Global, Inc., Santa Fe Springs, CA 90670 (US)
(72) Inventor: DINGELDEIN, Matthew R., Westlake, OH Ohio 44145 (US); KACHLINE, Jeffrey L., Highland Heights, OH Ohio 44143 (US)
(74) Representative: Grosse Schumacher Knauer von Hirschhausen

(57) **Abstract**

Embodiments of the present invention are welding torch assemblies that have connectors (600) which are pivotable within their respective connection ports (510). The connectors (600) have a retention portion which resides within a retention cavity portion of the connection ports (510) and allow the distal tips of the connectors to move relative to a centerline of the ports (510) when the connectors are inserted (600). Embodiments of the invention allow for the relaxation of manufacturing tolerances and ease of torch assembly.

## Description

### TECHNICAL FIELD

Devices, systems, and methods consistent with embodiments of the present invention relate to wire feeders, more specifically, methods and systems to connect welding gun cables to wire feeders and still more specifically to a welding torch assembly according to the preamble of claim 1.

### BACKGROUND

It is well known that in many welding operations a welding wire is used as a consumable electrode and is continuously delivered to the weld via a wire feeder. This is utilized in welding operations such as GMAW. An important aspect of using a consumable welding wire is maintaining a consistent and reliable flow of wire to the welding operation. This is typically done through a connection between a welding gun head assembly, the welding gun cable and the wire feeder. Thus the integrity and ease of connection between the welding cable and other components can be important. In some applications, the gun cable connection requires numerous protrusions to engage with the female connections on various components, for example used for the flow of coolant, positioning, wire guiding, etc. Because of these many protrusions the manufacture of the gun connector can be extremely difficult because of the build-up of manufacturing tolerances. Without precise and expensive manufacturing the connection between the male and female portions of the gun connector not be possible, and if connected the connection may not be optimal due to stresses and interference in the fit.

Further limitations and disadvantages of conventional, traditional, and proposed approaches will become apparent to one of skill in the art, through comparison of such approaches with embodiments of the present invention as set forth in the remainder of the present application with reference to the drawings.

### BRIEF SUMMARY OF THE INVENTION

The invention provides an assembly according to claim 1. An exemplary embodiment of the present invention is a gun cable connector having self-adjusting seal structures. The self-adjusting seal structures float within their respective cavities to allow for self-adjustment when connected permit easy and secure assembly of the gun connections. Further, each of the self-adjusting pin structures provide sufficient sealing such that the connection provides the sealing needed for proper operation. Other aspects, features and embodiments of the present invention are inferable from the ensuing figures, detailed description, and claims.

### BRIEF DESCRIPTION OF THE DRAWINGS

The above and/or other aspects of the invention will be more apparent by describing in detail exemplary embodiments of the invention with reference to the accompanying drawings, in which:
FIG. 1 is a diagrammatical representation of an exemplary welding system;
FIG. 2 is a diagrammatical representation of an exemplary wire feeder;
FIG. 3 is a diagrammatical representation of a side view of an exemplary wire feeder having an exemplary cable connection;
FIGs. 4A and 4B are diagrammatical representations of an exemplary power block;
FIG. 5 is a diagrammatical representation of an exemplary welding gun and welding gun connection assembly of embodiments of the present invention;
FIG. 6 is a diagrammatical representation of an exemplary connection portion;
FIG. 7 is a diagrammatical representation of a cross-section of an exemplary self-adjusting coupling as described herein; and
FIG. 8 is a diagrammatical representation of a cross-section of an exemplary connection discussed herein.

### DETAILED DESCRIPTION

Reference will now be made in detail to various and alternative exemplary embodiments and to the accompanying drawings, with like numerals representing substantially identical structural elements. Each example is provided by way of explanation, and not as a limitation. In fact, it will be apparent to those skilled in the art that modifications and variations can be made without departing from the scope or spirit of the disclosure and claims. For instance, features illustrated or described as part of one embodiment may be used on another embodiment to yield a still further embodiment. Thus, it is intended that the present disclosure includes modifications and variations as come within the scope of the appended claims and their equivalents.

Exemplary embodiments described herein are particularly applicable for use in connection with welding wire feeders and, therefore, embodiments of the present invention will be described with particular reference to wire feeders used in connection with a welding operation. However, the claimed invention has broader applications and may be used with other types of wire or other wire-like materials,

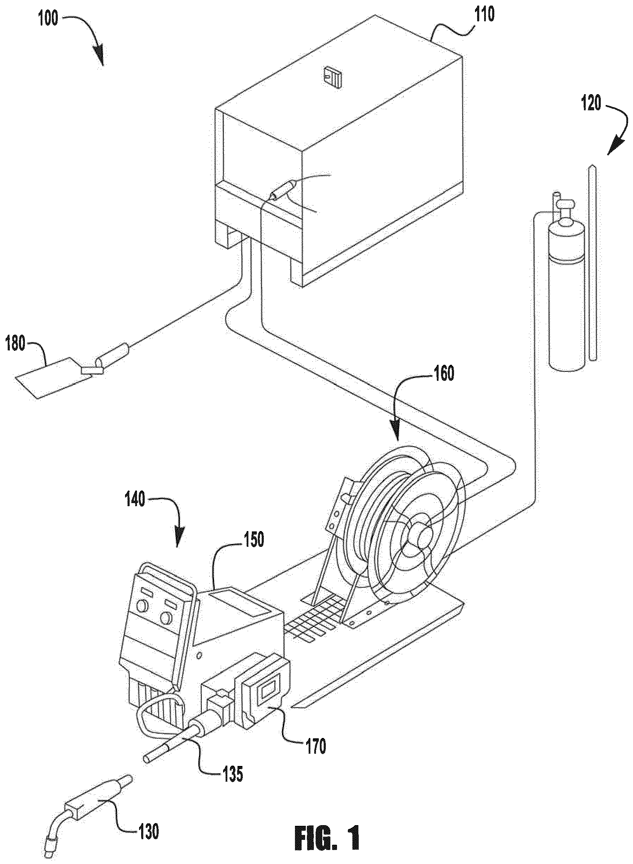

FIG. 1 illustrates an exemplary embodiment of an arc welding system 100 having a wire feeder 140. The system 100 includes a welding power source 110, the welding wire feeder 140, a welding wire source 160, a gas source 120, and a welding gun 130. The wire feeder 140 includes a controller 150 and a wire gripping device 170. The controller 150 may include a motor (not shown) that drives the wire gripping device 170 to pull a welding wire electrode from the welding wire source 160 through the wire gripping device 170 and into the welding gun 130 via a welding cable 135. Such welding systems are well known in the art. A first electrical terminal of the welding power source 110 may be connected to a work piece 180 such that the welding wire electrode, which is electrically connected to a second electrical terminal of the welding power source, may be applied to the work piece 180 via the welding gun 130 to produce a weld in an arc welding operation. Embodiments of the present invention are concerned with improvements to the connection of the cable 135 to the wire feeder 140, as will be explained further below.

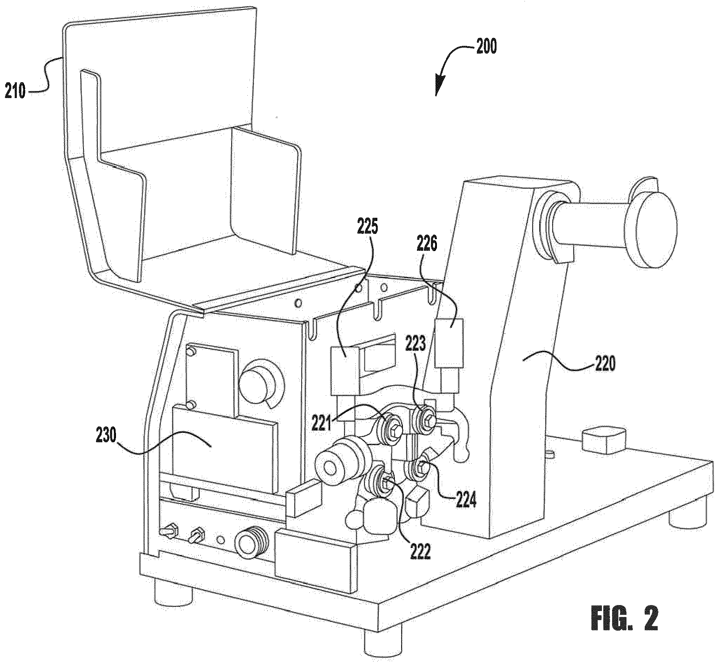

FIG. 2 illustrates an exemplary embodiment of a wire feeder 200 that may be used in the arc welding system 100 of FIG. 1. A cover 210 of the wire feeder 200 is opened to show a wire gripping device 220. As shown, the cover 210 has a moveable portion, such as a door or moveable cover section which allows easy access to the interior of the wire feeder and the wire feeding mechanisms. The door portion can be hinged to the rest of the cover or housing to allow for easy opening. The wire feeder 200 also includes a controller 230 which may be similar to the controller 150 of FIG. 1, for example. The wire gripping device 220 includes a first pair or rotatable rollers 221 and 222, and a second pair of rotatable rollers 223 and 224. Each pair is capable of gripping a welding wire there between and rotating to feed the welding wire from a welding wire source 160 to a welding gun 130. The wire gripping device 220 includes a force generating portion having two straight or linear adjustable force generating mechanisms (force generators) 225 and 226 (e.g., springs and adjustment elements) to adjust the gripping force between each pair of rollers, respectively. The construction of operation of exemplary wire feeders are well known and need not be described in detail herein. Exemplary wire feeders can include user input devices, controllers, CPUs and other components to facilitate the use of the wire feeder in multiple different types of welding operations. In fact, in some exemplary embodiments, the wire feeder 200 can be used in welding operations in which the torch is water cooled. Such systems need not be described in detail herein, as they are generally known.

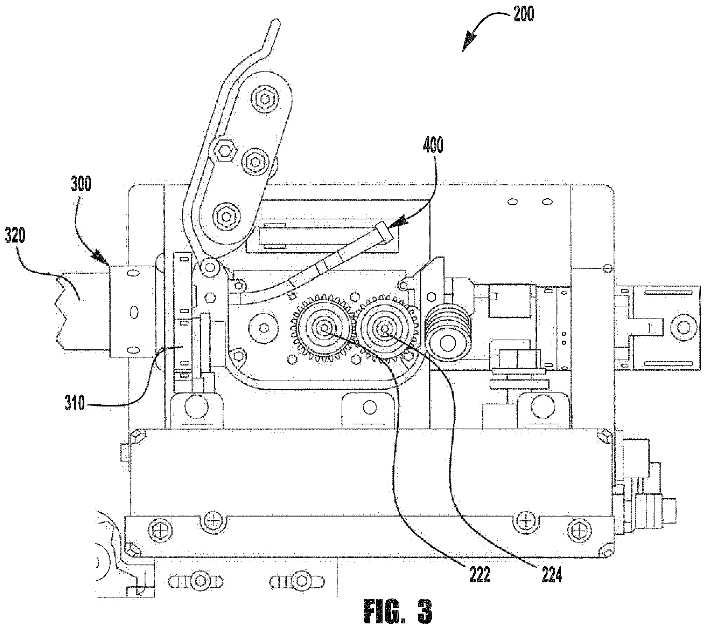

Figure 3 is a side view of another exemplary embodiment of a wire feeder which has a welding cable connection 300 consistent with an exemplary embodiment of the present invention. The connection 300 includes a power block portion 310 which is coupled to a cable connector portion 320, where the power block portion is mounted to an inside surface of the wire feeder housing and the cable connector portion 320 is mounted to the power block portion 310 outside of the housing and the cable 135 is connected to the cable connector portion 320. Also, as shown, the cable connection 300 and the power block portion 310 are configured such that the wire guide 400 for the cable 135 can be removed from inside the wire feeder 200 as shown. In prior wire feeder systems the cable 135 would have to be removed from the connector 320 for the wire guide 400 to be removed from the cable 135. As stated previously, this process is time consuming and increases the risk of damaging components. A such, embodiments of the present invention represent an improvement over prior wire feeder systems.

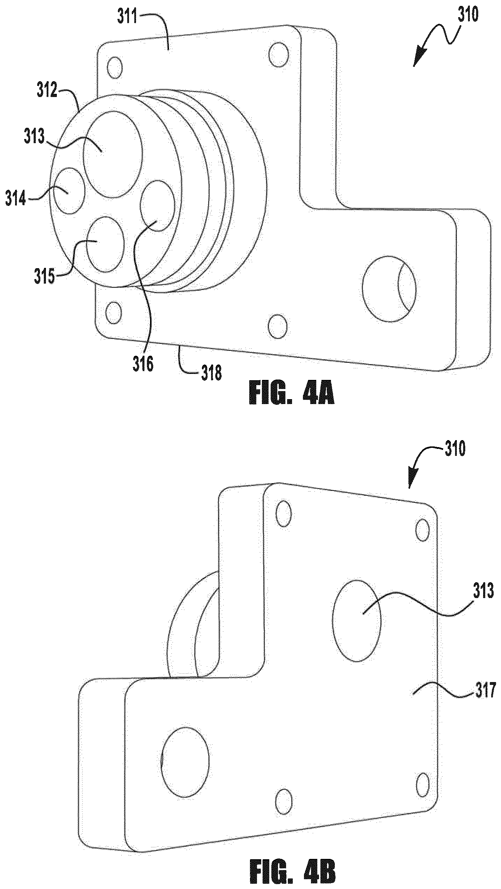

Figures 4A and 4B depict an exemplary embodiment of the power block portion 310. The power block 310 has a mounting face 311 which butts up against the inside surface of the wire feeder housing such that the cable connection extension portion 312 extends beyond the housing of the wire feeder and extends out such that the cable connector portion 320 is connected in the outside of the wire feeder housing. As shown, in the exemplary embodiments the extension portion 312 is circular in diameter and has a plurality of passages 313, 314, 315 and 316 in distal end face of the extension portion 312. The passage 313 extends from the distal end to the interior face 317 of the power block. When the power block 310 is mounted to the wire feeder 200 the interior face is positioned within the housing face the wire driving mechanisms in the wire feeder.

The passage 313 is the wire guide passage through which the wire guide from the cable 135 passes through the power block such that it couples the interior cavity of the wire feeder with the outside of the wire feeder. The wire guide assembly passes through this passage 313, and during use of the wire feeder 200, the wire consumable passes through this passage via the wire guide and into the cable 135. The other passages 314, 315 and 316 can be used for shielding gas, cooling gas and/or cooling liquid (for liquid cooled torches) as needed. In the embodiment shown, the passages 314, 315 and 316 are connected to exit passages (not shown) at the bottom 318 of the block 310 where connections are made for the gas/liquid as needed. It should be noted that embodiments of the present invention are not limited to liquid cooled embodiments, but can apply to both liquid cooled and non-liquid cooled wire feeders.

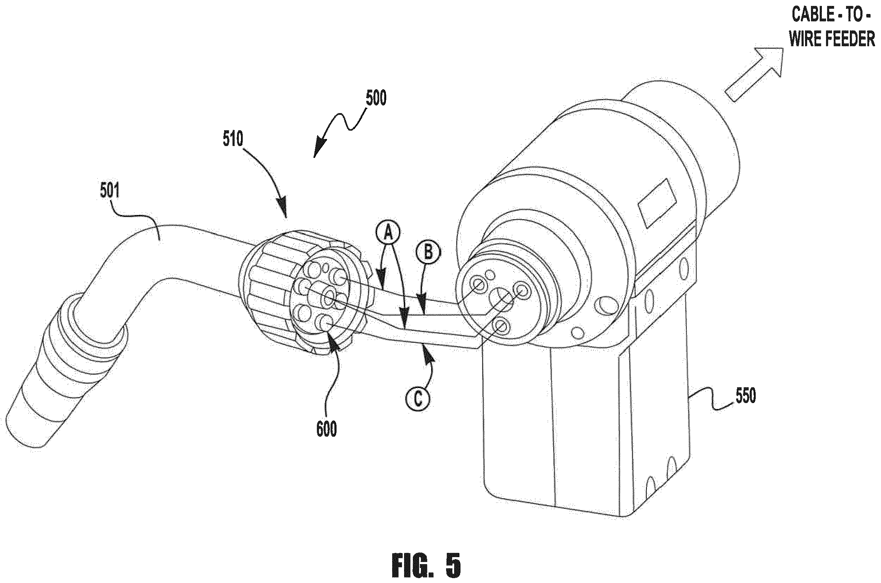

Turning now to Figure 5, an exemplary embodiment of a welding gun gooseneck assembly 500 is shown. As with known welding gun assemblies, the assembly 500 comprises a gooseneck or tube 501, which directs the consumable and shielding gas to the welding operation, and a connector portion 510 which can be comprised of a number of components (generally known) and which connects the assembly 500 to a torch connection assembly 550. The torch connection assembly 550 can comprise any number of components, such as a motor and pulleys for a push-pull gun configuration and other various, known components. As shown, exemplarily the water A, consumable B and gas C connections between the assemblies 500/550 mate with each other to ensure proper delivery of the gas, water and consumable to the assembly 500. The assembly 550 mates with the welding cable, the other end of which connects to the power block on the wire feeder as described above. Of course, embodiments of the present invention are not limited to the application or the assembly configurations shown in Figure, which are intended to be exemplary.

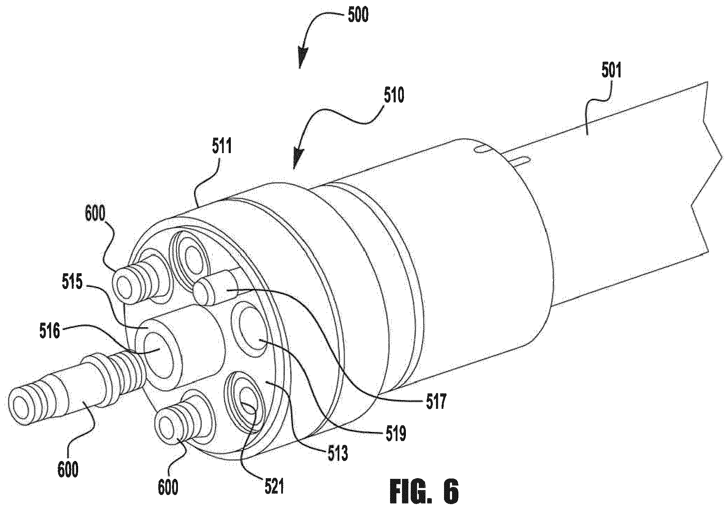

Turning now to Figure 6, as shown, the connector portion 510 can have a insulator portion 511 to which a cable connection collar secures to hold the portion 510 to the female opposing connection (see, e.g., 550 in Figure 5). The insulator portion 511 can have exterior threads or other known connection structure(s) to secure the connection. The connector portion 510 has a distal end surface 513 which can mate to a corresponding surface of the female connection side when the connection is made. The connection portion 510 can be made of any known materials.

Extending from the surface 513 is a wire guide portion 515. The wire guide portion can be centered in the surface 513 or positioned at any desired location. The wire guide portion 515 has a through-port 516 through which a wire liner/guide assembly is passed and which is used to deliver the welding wire to a welding operation. Additionally, the portion 515 is constructed such that it carries the welding current from the power block/wire feeder to the corresponding current carrying structure in the assembly 550. The structure and operation of the portion 515 is consistent with known gun connections and need not be described in detail herein. In some embodiments, the portion 515 can be integrally made with the surface 513 and other structure of the connector 511, and in other embodiments the portion 515 can be a removable component that can be secured via threads, etc.

A guide pin 517 may extend from the surface 513.. The guide pin 517 aligns with a corresponding hole in the female connection side such that the guide pin 517 is used to properly orient the connector portion 510 when it is being connected. This ensures that all of the appropriate ports and connections are made properly. Like the portion 515, the guide pin 517 can be made integrally with the surface 513 or can be removably secured with threads, etc.

As shown, the surface also contains a plurality of ports 519 (in Figure 6 there are three ports). These ports 519 extend into the connector portion 510 to allow the insertion of the self-adjusting connectors 600. In some exemplary embodiments, there could be as few as 1 port, while in others there can be two or more. These port/connector combinations are used to allow for the passage of coolant (outflow and inflow) and a shielding gas to the welding gun, for example. Of course, other uses can be used. In exemplary embodiments, at least some of (or all) of the connectors 600 are allowed to float within their respective ports (which will be explained more below). This ability to float allows the connectors 600 to self-adjust to the corresponding ports on the female connection side and thus make securing the connector 510 easier while eliminated the risk of damage and/or compromising the connection. Also shown in Figure 6 are recess portions 521 in the surface 513, which can be screws and screw insulators used to hold the inner and outer gooseneck assemblies together. It should be noted that embodiments of the present invention can be used with many different torch designs and are not limited to the torch designs depicted in the figures here - which are intended to be exemplary. For example, embodiments herein can be used in torches with multi cooling channels, and other connections. An example of such an exemplary embodiment is shown in United States Publication No. 2016/0074973, filed on September 15, 2014 and entitled Electric Arc Torch with Cooling Conduit. Again, the torch described therein is not intended to be limiting.

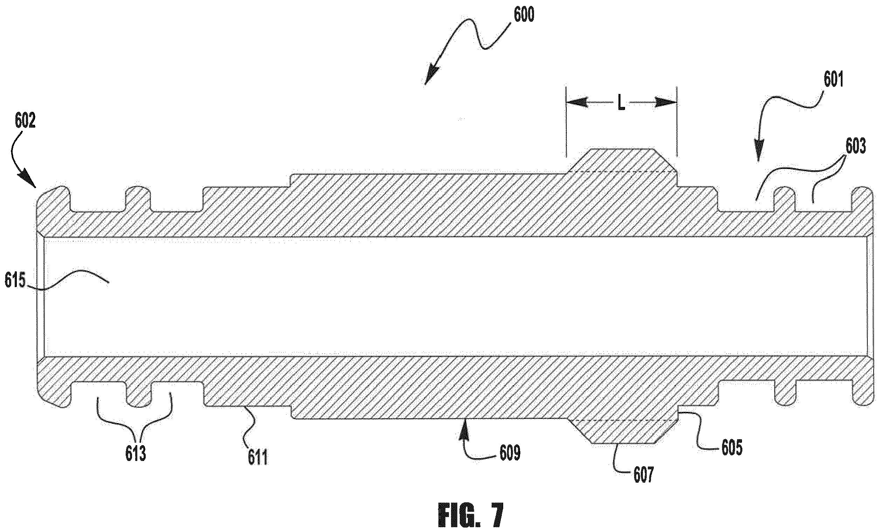

Figure 7 depicts a cross-section of an exemplary embodiment of the self-adjusting connector 600. As shown the connector 600 has an gun assembly insertion end 601 and an opposing insertion end 602. The gun assembly insertion end 601 is inserted into the port 519 in the surface 513 of the connector portion 510. The end 601 has at least two o-ring grooves 603 onto which o- rings are placed to allow for proper sealing in the connector 510. The o-rings and grooves 603 are to be size such that a proper seal is achieved but that the opposing insertion end 602 is able to move as needed to align and be inserted with minimal effort and interference. This will be explained further below. Upstream from the o-ring grooves 603 is a shoulder portion 605 which is adjacent to a thread portion 607, which has threads on an outer surface 609 of the connector 600. The threads of the thread portion 607 have the largest outer diameter of the connector 600 and are relatively short in length relative to the overall length of the connector. In exemplary embodiments, the length L of the thread portion 607 is in the range of 5 to 20 % of the overall length of the connector 600, and in some exemplary embodiments, the length of the thread portion 607 is in the range of 7 to 12%. Upstream of the outer surface 609 is a step portion 611 which has a smaller outer diameter than the outer surface 609 and which leads to the opposing insertion end 602, which also has at least two o-ring grooves 613. The connector 600 also has a channel 615 which passes through the center of the connector 600 which aligns with ports in both of the power block and the connector 510 to allow fluids such as coolant/shielding gas pass as needed

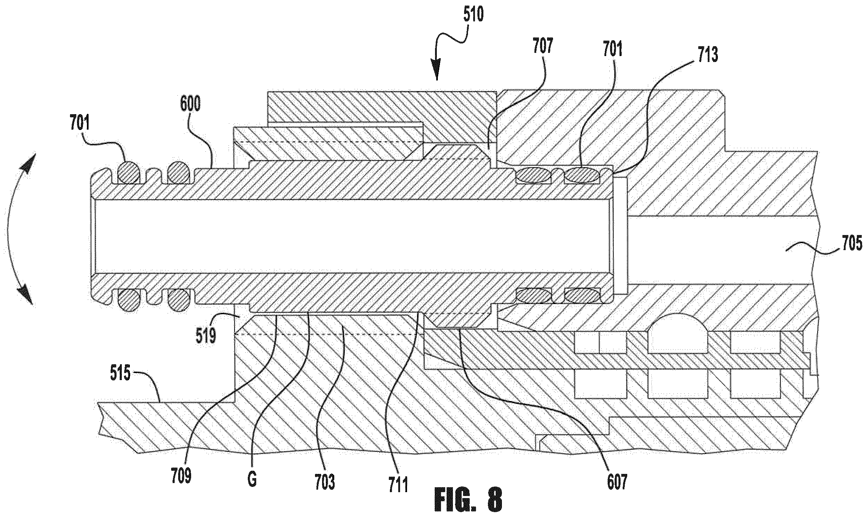

Figure 8 depicts an exemplary cross-section of a connector 600 within the port 519 of the gun connector 510. As shown, the connector 510 can be comprised of a number of components as needed to provide the desired function and connection. However, the exemplary embodiments discussed herein are not intended to be limited to the configuration and assembly of the gun connector 510 components.

As shown in Figure 8, the connector 600 is inserted within the port 519 so that the majority of the connector 600 is within the port 519. The o-rings 701 seat against an inner surface of the port as shown and the channel 615 is in communication with a corresponding channel 705 in the connector 510. Further, the port 519 has a seat surface 713 onto which the distal end surface of the connector 600 engages when inserted to ensure that the connector 600 is not inserted too far into the port. The port also has a thread cavity portion 707 into which the threads 607 of the connector 600 are inserted when the connector 600 is fully inserted into the port 519. That is the wall diameter of the cavity 707 is larger than the outermost diameter of the threads 607 so that there is no thread engagement when the threads are within the cavity 707. As shown, the cavity 707 has the largest diameter of the port 519. Upstream of the cavity 707 is a port thread portion 703 which has threads that correspond to the threads 607 on the connector 600. During assembly the connector 600 is threaded into the port 519 via the threads 607 and 703. However, the connector is threaded in to a distance such that the threads 607 enter into the cavity 707 and are no longer engaged with the threads 703 in the port 519. The threads 703 then act as a barrier to prevent inadvertent withdrawal or removal of the connector 600. Further, the crest of the threads 709 have a height such that a gap G exists between the surface 609 and the thread crests. The gap should be of sufficient distance to allow the connector 600 to move when it is installed in the port 519. This movement allows the connector to align with the corresponding ports in the power block during cable connection without the need for extremely difficult manufacturing tolerances to be maintained. That is, by having the threads 607 reside within the cavity 707 - and not be in any threaded engagement when fully installed - allows the connector to move slightly during connection. This ability to move, particularly for a plurality of connectors 600 on the connector 510 allows for easy connection, easier manufacture and appreciably reduces the risk of component damage during connection. In exemplary embodiments, this configuration allows the opposing end 602 of the connector 600 to be moved in the range of 0.5 and 5 degrees from the centerline of the port 519 to allow for proper alignment, while still maintaining a proper seal. In other exemplary embodiments, the connector 600 can be moved in the range of 0.5 to 2 degrees. With these degrees of freedom the components can move slightly during assembly allowing for looser location tolerances and significant reductions in production costs, while also ensuring desired fitment and reliability.

It is noted that in some embodiments, rather than using a thread 607 on the connector a protrusion can be used that extends from the surface 609 that engages with a cavity within the port 519, such that the connector 600 can be secured from being removed from the connector 510 inadvertently, but still allows the connector 600 to move to be properly positioned and oriented during connection.

Further, it is noted that while the above embodiments show that the connectors 600 are engaged with the port 519 in the cable connector 510, other embodiments are not limited to this. For example, the ports 519 can be located within the wire feeder power block such that the connectors 600 are secured in the power block and the cable connector 510 has the female ports that align with the connectors for the gun cable connection. Additionally, while the use of the connectors 600 are shown with respect to the connection of the torch to the assembly 550, embodiments of the present invention can be used in multiple or different locations. For example, these connections can be used to connect the cable to the opposite end of the assembly 550 and/or can be used to connect the cable to the power block on the wire feeder. Additionally, embodiments of the present invention are not limited to uses in welding applications but can be used in many other applications where a multiple protrusion male-to-female connection is needed.

Embodiments of the present invention are welding torch assemblies that have connectors 600 which are pivotable within their respective connection ports 510. The connectors 600 have a retention portion which resides within a retention cavity portion of the connection ports 510 and allow the distal tips of the connectors to move relative to a centerline of the ports 510 when the connectors are inserted 600. Embodiments of the invention allow for the relaxation of manufacturing tolerances and ease of torch assembly.

While the subject matter of the present application has been described with reference to certain embodiments, it will be understood by those skilled in the art that various changes may be made and equivalents may be substituted without departing from the scope of the subject matter. In addition, many modifications may be made to adapt a particular situation or material to the teachings of the subject matter without departing from its scope. Therefore, it is intended that the subject matter not be limited to the particular embodiment disclosed, but that the subject matter will include all embodiments falling within the scope described herein.

**REFERENCE NUMERALS**

| | | | |
|---|---|---|---|
| 100 | arc welding system | 317 | interior face |
| 110 | welding power source | 320 | cable connector portion |
| 120 | gas source | 400 | wire guide |
| 130 | welding gun | 500 | assembly |
| 135 | cable | 501 | tube |
| 140 | wire feeder | 510 | gun connector portion |
| 150 | controller | 511 | insulator portion |
| 160 | welding wire source | 513 | end face |
| 170 | wire gripping device | 515 | wire guide portion |
| 180 | workpiece | 516 | through port |
| 200 | wire feeder | 517 | guide pin |
| 210 | cover | 519 | port |
| 220 | wire gripping device | 521 | recess portion |
| 221 | rotatable roller | 550 | torch connection assembly |
| 222 | rotatable rollter | 600 | connector |
| 223 | rotatable roller | 601 | gun assembly insertion gun |
| 224 | rotatable roller | 602 | opposing insertion end |
| 225 | force generating mechanism | 603 | o-ring groove |
| 226 | force generating mechanism | 605 | shoulder portion |
| 230 | controller | 607 | thread portion |
| 300 | welding cable connection | 609 | outer surface |
| 310 | power block portion | 611 | step portion |
| 311 | mounting face | 613 | o-ring groove |
| 312 | extension portion | 615 | channel |
| 313 | passage | 701 | o-ring |
| 314 | passage | 703 | port thread portion |
| 315 | passage | 705 | channel |
| 316 | passage | 707 | thread cavity portion |
| 709 | thread | C | gas connection |
| 713 | seat surface | G | gap |
| A | water connection | L | length |
| B | consumable connection | | |

## Claims

1. A welding torch assembly, comprising:
a connector portion (510) having an end face (513) and at least one connector port (519) which is open at said end face (513), where said connector port (519) comprises a connector retention cavity; and
a connector (600) inserted into said connector port (519) where at least a portion of said connector (600) extends beyond said end face (513), and where said connector comprises a connector retention portion where said connector retention portion is inserted into said connector retention cavity,
**characterized in that** said connector (510) is pivotable with respect to a centerline of said connector port (519) when said connector (510) is fully inserted into said connector port (519).

2. The assembly of claim 1, wherein said connector retention portion comprises a thread.

3. The assembly of claims 1 or 2, wherein said connector port (519) comprises a thread portion between said connector retention cavity and said end face.

4. The assembly of claims 2 and 3, wherein the thread portions are not in any threaded engagement when the connector (600) is fully installed within the connector port (519)

5. The assembly of claim 3 or 4, wherein a lateral and/or upper gap (G) exists between an outer surface (609) of the connector (600) and a crest of a thread (709) of the thread portion of the connector port (519); and/or wherein a lateral gap exists between the shoulder portion (605) and a corresponding abutment portion of the connector port (519).

6. The assembly of one of the claims 1 to 5, wherein said connector retention portion does not engage with a surface of said connector port when inserted into said connector retention cavity.

7. The assembly of one of the claims 1 to 6, wherein said connector retention portion has a length (L) which is in the range of 5 to 20% of the overall length of said connector (600), or wherein said connector retention portion has a length which is in the range of 7 to 12% of the overall length of said connector.

8. The assembly of one of the claims 1 to 7, wherein a distal end of said connector is pivotable within a range of 0.5 to 5 degrees with respect to said centerline, or wherein a distal end of said connector is pivotable within a range of 0.5 to 2 degrees with respect to said centerline.

9. The assembly of one of the claims 1 to 8, wherein said welding torch assembly is a gooseneck welding torch assembly (500).

10. The assembly of one of the claims 1 to 9, wherein said connector port comprises an upstream seat surface which contacts an upstream end surface of said connector when said connector is inserted into said connector port.

11. The welding torch assembly of one of the claims 1 to 10, wherein the connector portion has a plurality of said connector ports.

12. The welding torch assembly of claim 11, having a plurality of said connectors, where each one of said connectors is inserted into said connector ports, respectively, where each of said connector retention portions is inserted into said respective connector retention cavity.

13. The welding torch assembly of claim 12, wherein each of said connectors are pivotable with respect to a centerline of each of said respective connector ports when said connectors are fully inserted into said connector ports.

14. A welding torch assembly, in particular according to one of the preceding claims, comprising:
a connector portion having an end face and a plurality of connector ports which are each open at said end face, where each of said connector ports comprise a connector retention cavity, respectively; and
a plurality of connectors, where each one of said connectors is inserted into said connector ports, respectively, where at least a portion of each of said connectors extend beyond said end face, and where each of said connectors comprise a connector retention portion, respectively, where each of said connector retention portions is inserted into said respective connector retention cavity,
wherein each of said connectors are pivotable with respect to a centerline of each of said respective connector ports when said connectors are fully inserted into said connector ports, and wherein a distal end of each of said connectors are pivotable within a range of 0.5 to 5 degrees with respect to said centerline.

15. The assembly of claim 12, wherein each of said connector retention portions comprise a thread; and/or wherein each of said connector ports comprise a thread portion between said respective connector retention cavities and said end face; and/or wherein said connector retention portions do not engage, respectively, with a surface of said respective connector ports when inserted into said respective connector retention cavities; and/or wherein each of said connector retention portions has a length which is in the range of 5 to 20% of the overall length of said respective connectors; and/or wherein each of said connector retention portions has a length which is in the range of 7 to 12% of the overall length of said respective connectors; and/or wherein said distal end of said connectors are pivotable within a range of 0.5 to 2 degrees with respect to said centerlines; and/or wherein said welding torch assembly is a gooseneck welding torch assembly; and/or wherein each of said connector ports comprises an upstream seat surface, respectively, which contacts an upstream end surface of each of said respective connectors when said connectors are inserted into said respective connector ports.
